# EUROPEAN PATENT APPLICATION

(11) **EP 4 410 679 A2**
(43) Date of publication of application: **07.08.2024**
(21) Application number: 24183634.5
(22) Date of filing: 03.05.2021
(51) Int. Cl.: B64D 27/02

(54) **PROPULSION SYSTEM, AIRCRAFT HAVING A PROPULSION SYSTEM, AND METHOD OF MANUFACTURING AN AIRCRAFT**

(30) Priority: 05.05.2020 US 202062704337 P
(62) Divisional of application: 21171764.0
(71) Applicant: Gulfstream Aerospace Corporation, Savannah, Georgia 31402 (US)
(72) Inventor: Freund, Donald, Savannah (US); Muzychka, Derek, Savannah (US); Klutzke, Douglas, Savannah (US)
(74) Representative: LKGlobal UK Ltd.

(57) **Abstract**

A propulsion system for an aircraft is taught herein. The propulsion system includes, but is not limited to, an engine. The propulsion system further includes, but is not limited to, an outer cover associated with the engine. The engine and the outer cover are configured for coupling to the aircraft. The propulsion system further includes, but is not limited to, an external engine component. The propulsion system still further includes, but is not limited to, a coupler that operatively couples the external engine component to the engine. The external engine component is configured to be coupled to the aircraft at a location spaced apart from the engine.

## Description

### TECHNICAL FIELD

The present invention relates generally to aircraft, and more particularly relates to a propulsion system for an aircraft and a method of manufacturing an aircraft equipped with the propulsion system.

### BACKGROUND

Aircraft performance (e.g., maximum speed; rates of fuel consumption at cruise speed) is hampered by drag, among other factors. It is therefore desirable to reduce the drag acting on an aircraft to the greatest extent possible. An aircraft's propulsion system can contribute significantly to the drag acting on the aircraft. The larger the periphery of the propulsion system (e.g., the diameter), the greater the amount of drag acting on the propulsion system will be. Accordingly, it is desirable that the periphery of an aircraft's propulsion system be as small as possible.

Some of the components that are necessary to and/or that are ancillary to the operation of an aircraft's engine have conventionally been mounted directly to an external surface of the aircraft's engine and housed within the outer mold line (OML) of the propulsion system. These components will be referred to herein as "external engine components" and shall include any component that is involved in, or that is ancillary to, the operation of the engine and which has been both conventionally mounted to an external surface of the engine and housed within the OML of the propulsion system. For example, engines typically include an accessory gear box with line replaceable units (e.g., hydraulic pump, starter, generator, fuel pump, and the like), controls (engine electronic control, ignitor boxes and the like) and tanks (oil and the like) that are mounted to an outer surface of the engine but are covered by the propulsion system's nacelle. Accordingly, the nacelle has conventionally been shaped/dimensioned to accommodate these components. This causes the propulsion system to have a larger periphery than it otherwise would have if these components were not mounted to the external surface of the engine. As stated above, this has a negative impact on the drag caused by the propulsion system. However, these components perform vital functions and cannot simply be eliminated from the propulsion system.

Accordingly, it is desirable to continue providing the functionality of these components without having to enlarge the periphery of the propulsion system to accommodate them. It is further desirable to provide a method of manufacturing such a propulsion system. Furthermore, other desirable features and characteristics will become apparent from the subsequent summary and detailed description and the appended claims, taken in conjunction with the accompanying drawings and the foregoing technical field and background.

### BRIEF SUMMARY

An aircraft propulsion system, an aircraft, and a method of manufacturing an aircraft are disclosed herein.

In a first non-limiting embodiment, the propulsion system for an aircraft includes, but is not limited to, an engine. The propulsion system further includes, but is not limited to, an outer cover associated with the engine. The engine and the outer cover are configured for coupling to the aircraft. The propulsion system further includes, but is not limited to, an external engine component. The propulsion system still further includes, but is not limited to, a coupler that operatively couples the external engine component to the engine. The external engine component is configured to be coupled to the aircraft at a location spaced apart from the engine.

In another non-limiting embodiment, the aircraft includes, but is not limited to, a fuselage. The aircraft further includes, but is not limited to, a wing. The aircraft further includes, but is not limited to, a propulsion system coupled with at least one of the fuselage and the wing. The propulsion system includes, but is not limited to an engine, an outer cover associated with the engine, an external engine component, and a coupler operatively coupling the external engine component to the engine. The external engine component is coupled to the aircraft at a location spaced apart from the engine.

In yet another non-limiting embodiment, the method of manufacturing an aircraft includes, but is not limited to the step of obtaining a wing, a fuselage, an engine, an engine cover, an external engine component, and a coupler. The method further includes, but is not limited to the step of coupling the wing with the fuselage. The method further includes, but is not limited to the step of mounting the engine cover to the engine. The method further includes, but is not limited to the step of mounting the engine cover and the engine to one of the wing and the fuselage. The method further includes, but is not limited to the step of mounting the external engine component at a location spaced apart from the engine. The method still further includes, but is not limited to the step of coupling the external engine component to the engine via the coupler.

### BRIEF DESCRIPTION OF THE DRAWINGS

The present invention will hereinafter be described in conjunction with the following drawing figures, wherein like numerals denote like elements, and
FIG. 1 is a transparent, perspective view illustrating a prior art propulsion system;
FIG. 2 is a transparent, perspective view illustrating a non-limiting embodiment of a propulsion system made in accordance with the teachings disclosed herein;
FIG. 3 is a fragmentary, schematic view of a non-limiting embodiment of an aircraft equipped with the propulsion system of FIG. 2;
FIG. 4 is a fragmentary, schematic view of an alternate non-limiting embodiment of an aircraft equipped with the propulsion system of FIG. 2;
FIG. 5 is a schematic view of various elements of the propulsion system of FIG. 2; and
FIG. 6 is a block diagram illustrating a non-limiting embodiment of a method of assembling an aircraft in accordance with the teachings disclosed herein.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved propulsion system for use with an aircraft is disclosed herein. In a non-limiting embodiment, the propulsion system includes an engine surrounded by a nacelle, the nacelle having an outer mold line. As used herein, the term "outer mold line" refers to the outer periphery of the aircraft or of the aircraft component or of the aircraft portion being referenced. In a non-limiting embodiment, the propulsion system may be a podded propulsion system that is mounted to a fuselage or wing of the aircraft by one or more pylons. In other embodiments, the propulsion system may be an embedded propulsion system that is not mounted to the aircraft by pylons, but rather, is mounted directly to the aircraft and entirely or partially incorporated into the OML of the wing, the fuselage, or both. In other embodiments, other mounting arrangements may be employed without departing from the teachings of the present disclosure.

In a non-limiting embodiment, the engine is mounted within the nacelle such that the nacelle completely envelopes the engine in both a longitudinal and circumferential direction (in other words, the nacelle is an outer tube that houses the engine whose longitudinal ends extend beyond the longitudinal ends of the engine). The shape and magnitude of the periphery of the outer mold line at each longitudinal location along the nacelle is a direct function of the magnitude of the diameter/periphery of the engine at a corresponding longitudinal location plus the magnitude of the dimensions of any external engine component(s) attached to the engine at that longitudinal location, plus the annular thickness of the nacelle at that longitudinal location. In a non-limiting embodiment, an entire external surface of the engine may be free of external engine components or the number of external engine components attached to the external surface of the engine is minimized. These external engine components can be mounted remotely at other locations on board the aircraft, including, but not limited to, the pylon used to mount the propulsion system to the aircraft, the wing of the aircraft and the fuselage of the aircraft. Such remote mounting of these external engine components will permit an inner surface of the nacelle to be in contact with, or to be in close proximity to the outer surface of the engine. This, in turn, allows the outer surface of the nacelle to be, correspondingly, be free of protuberances and projections that would normally need to be present to accommodate/house such external engine components. The absence of such protuberances and/or projections permits the outer mold line of the propulsion system to be as small as possible. This, in turn, reduces the amount of drag that will act on the propulsion system and, as a result, on the entire aircraft.

When external engine components are removed from the external surface of the engine and relocated to a pylon, a wing, a fuselage, or elsewhere on an aircraft, there are other benefits in addition to a reduction in drag. For example, when mounted remotely from the engine, such components are exposed to much less severe thermal conditions and much lower levels of vibration as compared to the environment provided within the nacelle around the engine. Repair and replacement of such external engine components may also be facilitated by such remote positioning.

A greater understanding of the aircraft and the propulsion system referred to above and a method of manufacturing the propulsion system may be obtained through a review of the illustrations accompanying this application together with a review of the detailed description that follows.

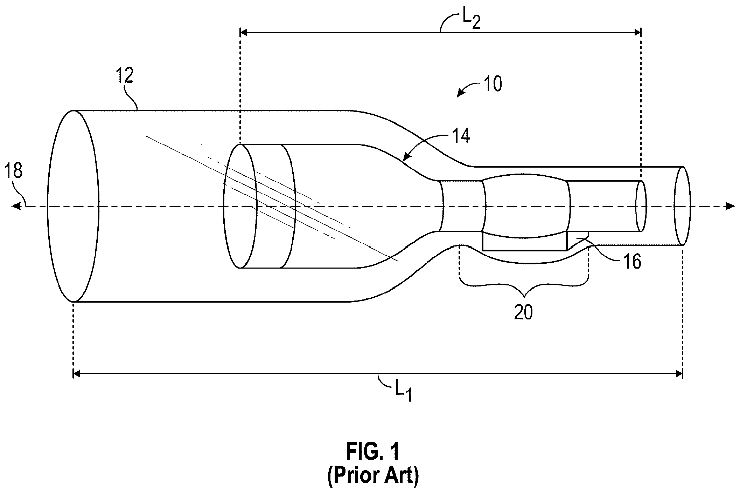

With reference to FIG. 1, a transparent perspective view of a simplified embodiment of a conventional propulsion system 10 is illustrated. Conventional propulsion system 10 includes an outer cover 12 surrounding an engine 14. Attached to engine 14 is an exterior engine component 16. Because FIG. 1 presents a simplified embodiment, it should be understood that additional components are commonly included with conventional propulsion system 10 but have been omitted for the purposes of simplifying the illustration. For example, in other embodiments, conventional propulsion system 10 may include a propulsion system inlet, an exhaust nozzle, and one or more additional exterior engine components 16, as well as many other items/structures/components/machines which are not necessary to convey the teachings disclosed herein.

In the illustrated embodiment, outer cover 12 is a nacelle that extends longitudinally for a length L₁ along longitudinal axis 18. Outer cover 12 is a tubular structure that longitudinally and circumferentially surrounds engine 14 and exterior engine component 16. Outer cover 12 has an aerodynamic exterior that is configured to interact with the freestream of air passing over propulsion system 10 during flight. One goal of outer cover 12 is to provide a smooth, continuous, undisrupted surface to avoid creating disturbances in the freestream as the freestream passes over and around outer cover 12 during flight. Discontinuities in the outer surface of outer cover 12 give rise to disturbances in the freestream which, in turn, give rise to drag (induced drag) acting on the exterior surface of propulsion system 10. This, in turn, gives rise to induced drag acting on the aircraft to which propulsion system 10 is attached.

Engine 14 may comprise any suitable engine configured to consume air and fuel, to combine and combust them, and as a result of such combustion, to generate a high energy, directed jet that provides thrust. For example, and without limitation, engine 14 may comprise a turbofan jet engine, a turboprop jet engine, a turboshaft engine, a ramjet engine, a scramjet engine, a variable cycle turbofan, and a combined cycle propulsion system. Engine 14 extends for a length L₂ along longitudinal axis 18. As illustrated, L₂ is less than Li, creating a tube-within-a-tube arrangement with respect to outer cover 12. In more complex embodiments, an inlet would be positioned upstream of, and fluidly coupled to the forward most portion of engine 14 to funnel, and in some cases, slow the freestream of air into engine 13. Additionally, in more complex embodiments, a nozzle would be positioned downstream of, and fluidly coupled with an aftmost portion of engine 14 to guide and focus the jet to control the resulting thrust. When present, both the inlet and the nozzle would be at least partially longitudinally and circumferentially enveloped within outer cover 12.

External engine component 16 is illustrated with a generic appearance and is intended to represent any one of a multitude of components that are conventionally attached to the outer surface of an engine such as engine 14 and that either provides inputs to, or that takes outputs from engine 14 and which facilitates the operation of, or that engages symbiotically with, engine 14. Exterior engine component 14 may comprise an accessory gear box ("AGB"), an accessory gear box line replaceable unit ("LRU"), an electronic engine controller ("EEC") and an igniter box. Other external engine components may also include, but are not limited to, an oil tank, a pressure accumulator, a engine variable geometry flow path actuator, fluid valves, and drain masts.. Although only a single external engine component is illustrated as being attached to engine 14 in FIG. 1, it should be understood that more than one external engine component may be attached to an external surface of engine 14.

Outer cover 12 includes a bump-out 20. Bump-out 20 comprises a protuberance or a projection defined by a region of outer cover 12 where the outer mold line of outer cover 12 swell or protrudes out radially from the surrounding surface of outer cover 12. The longitudinal and circumferential position of bump-out 20 corresponds with the longitudinal and circumferential location of external engine component 16 on the external surface of engine 14. In this manner, bump-out 20 provides an internal pocket or cavity within outer cover 12 that is intended and configured to accommodate the presence of external engine component 16. If other external components were attached at other locations around and along the external surface of engine 14, then additional bump-outs would be required to accommodate their presence. Alternatively, rather than providing a bump-out to accommodate the external engine component, outer cover 12 may simply have a larger diameter periphery to provide a large gap between an inner surface of outer cover 12 and an outer surface of engine 14 to permit the attachment of external engine components at any desired location along the outer surface of engine 14.

The presence of bump-out 20 creates a perturbation to the oncoming freestream. When the freestream encounters bump-out 20, it must deviate around bump out 20. This deviation of flow gives rise to an elevated level of drag as discussed above. Similarly, in embodiments where bump-outs are not employed, but rather, where the entire diameter of the outer cover is enlarged to accommodate the placement of external engine components at any location along an outer surface of engine 14, the freestream is presented with a propulsion system having a larger cross-sectional profile. As with bump-out 20, a larger cross-sectional profile will also give rise to an elevated level of drag.

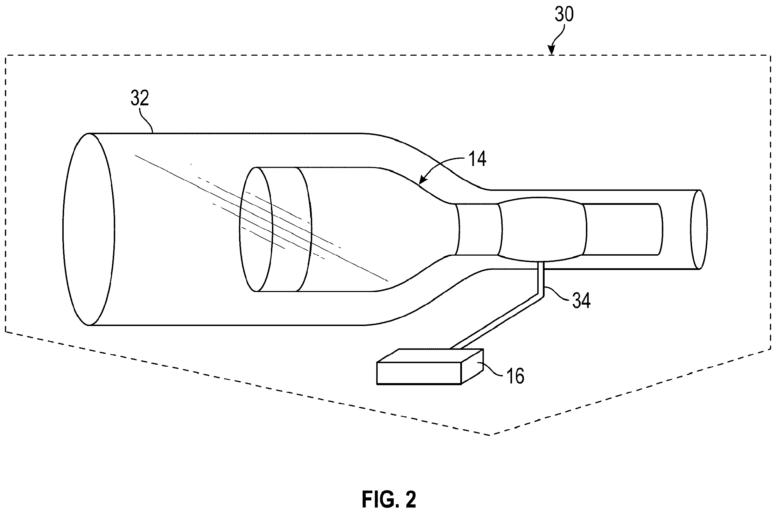

With continuing reference to FIG. 1, FIG. 2 is a transparent, perspective view illustrating a simplified embodiment of a propulsion system 30 made in accordance with the teachings of the present disclosure. Propulsion system 30 includes an outer cover 32, engine 14, external engine component 16, and a coupler 34. Engine 14 and external engine component 16 have been discussed in detail above and for the sake of brevity, those comments will not be repeated here.

Outer cover 32 is identical to outer cover 12 with a single exception. Outer cover 12 has bump-out 20 and outer cover 32 has no bump-out. Instead, outer cover 32 has a smooth, aerodynamically continuous, undisrupted outer surface at the longitudinal and circumferential location where outer cover 12 has bump-out 20. In this manner, outer cover 32 provides less disruption to the freestream of air flowing over and around propulsion system 30 and therefore induces less drag. As compared with instances where engine 14 of propulsion system 10 has been fitted with multiple external engine components 16 and wherein outer cover 12 had had a larger overall diameter to accommodate such additional external engine components, engine 14 of propulsion system 30 removes and relocates such external engine components 16 from the external surface of engine 14 permitting outer cover 32 to have a smaller diameter overall outer periphery. As discussed above, this would result in a reduction in induced drag acting on propulsion system 30 during flight. It should be understood that although reduction in drag is a beneficial result of the teachings disclosed herein, it is not the sole benefit of the disclosed configuration. Other benefits are also obtained. For example, the teachings disclosed herein may be beneficial in circumstances where the engine and outer cover are required to fit into a relatively confined package space. Other advantages may also be obtained through application of the teachings contained herein.

What makes the omission of bump-out 20 and/or the shrinkage of the overall diameter of the periphery of outer cover 32 possible is the removal of external engine component 16 from the external surface of engine 14 and the repositioning of this component to a remote location that is spaced apart from engine 14. This repositioning, in turn, has been made possible by the use of coupler 34. Coupler 34 may comprise any mechanical and/or electrical and/or operative and/or communicative coupling structure, member, device, linkage, or other apparatus that permits the communication of force or signals or inputs or outputs or instructions between external engine component 16 and engine 14. For example, and without limitation, coupler 14 may comprise an electrical wire, a coaxial cable, a mechanical linkage, a wire harness, tube, tube bundle, duct, wireless signal, and power take-off shaft.

Such coupling between external engine component 16 and engine 14 allows external engine component 16 to continue providing its functionality to engine 14 without being physically mounted thereon. In this manner, coupler 34 makes it possible for propulsion system 30 to have all of the functionality of propulsion system 10, but with a more streamlined profile leading to a measurable reduction in the amount of induced drag caused by the outer cover/nacelle. As set forth below, external engine component 16 may be housed/packaged/mounted at any suitable location on board an aircraft that is equipped with propulsion system 30.

With continuing reference to FIGS. 1-2, FIG. 3 is a fragmentary, schematic view of a non-limiting embodiment of an aircraft 40 configured with multiple propulsion systems 30. Aircraft 40 has been greatly simplified and omits many features that would commonly be included on an aircraft for ease of illustration.

Aircraft 40 comprises a fuselage 42, a wing 44, and a plurality of propulsion systems 30 (propulsion system 30_{A} and propulsion system 30_{B}). In the illustrated embodiment, aircraft 40 comprises a supersonic aircraft, but it should be understood that the teachings disclosed herein apply equally to propulsion systems and aircraft that are configured for subsonic flight. Additionally, although the teachings presented herein are disclosed in the context of an aircraft, it should be understood that they are not so limited and may also be applicable to other types of vehicles.

Fuselage 42 may comprise any conventional fuselage. Accordingly, fuselage 42 may be configured to house an aircraft cabin, a flight deck, a cargo, hold, a galley, and various other types of compartments and machinery necessary to the operation of aircraft 40. In addition, fuselage 42 may comprise one or more internal cavities in which machinery, components, and apparatuses may be housed.

Wing 44 may comprise any conventional wing. Accordingly, wing 44 may be configured to house slats, ailerons, fuel tanks, landing gear, flaps and any other conventional machinery necessary to support operation of wing 44 and of aircraft 40. In addition, wing 44 may comprise one or more internal cavities in which machinery, components, and apparatuses may be housed.

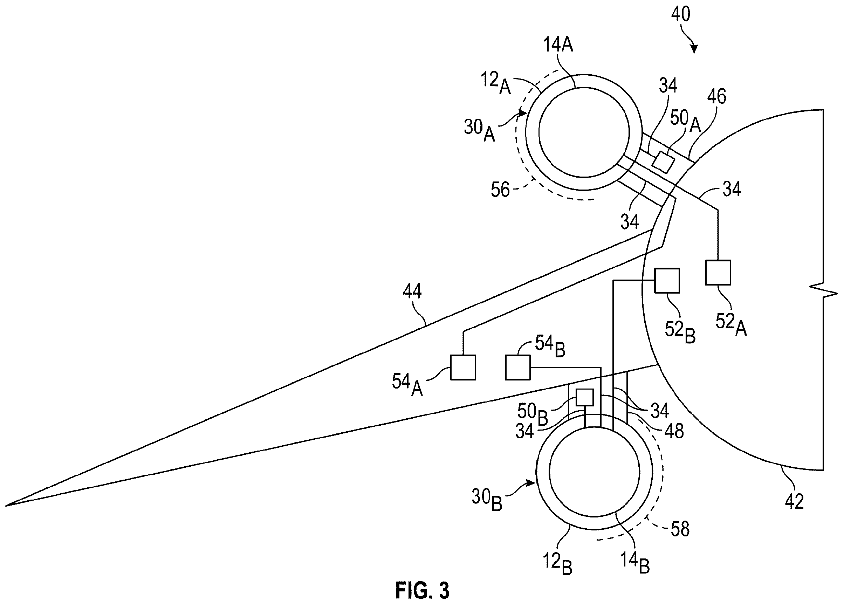

As illustrated in FIG. 3, propulsion system 30a is mounted in a podded configuration to fuselage 42 by a pylon 46 and propulsion system 30_{B} is mounted in a podded configuration to wing 44 by a pylon 48. It should be understood that in other embodiments of aircraft 40, only a single propulsion system may be employed without departing from the teachings of the present disclosure. Further, in embodiments where multiple propulsion systems are employed, the propulsion systems may be mounted to only one of fuselage 42 or wing 44 rather than to both without departing from the teachings of the present disclosure.

Pylons such as pylon 46 and pylon 48 are well known in the relevant art and are configured to provide a structural support for both engine 14 and outer cover 32. In addition, pylons may comprise one or more internal cavities in which machinery, components, and apparatuses may be housed.

In the embodiment illustrated in FIG. 3, propulsion system 30a and propulsion system 30_{B} have each been illustrated with three external components. Propulsion system 30a includes external component 50_{A}, external component 52_{A}, and external component 54_{A} while propulsion system 30_{B} includes external component 50_{B}, external component 52_{B}, and external component 54_{B}. It should be understood that, in other embodiments, propulsion system 30a and 30_{B} may have fewer or more external components than are illustrated in FIG. 3 without departing from the teachings of the present disclosure.

With respect to Propulsion system 30_{A}, external component 50_{A} is mounted withing pylon 46, external component 52a is mounted within fuselage 42 an external component 54_{A} is mounted within wing 44. Each external component 50_{A}, 52_{A}, and 54_{A} is coupled with engine 14_{A} of propulsion system 30a via a coupler 34.

Similarly, with respect to propulsion system 30_{B}, external component 50_{B} is mounted within pylon 48, external component 52_{B} is mounted within fuselage 42, and external component 54_{B} is mounted within wing 44. Each external component 50_{B}, 52_{B}, and 54_{B} is coupled with engine 14_{B} of propulsion system 30a via a coupler 34.

By positioning external components 50_{A}, 52_{A}, and 54_{A} and 50_{B}, 52_{B}, and 54_{B} remotely from engines 14_{A} and 14_{B}, outer cover 12_{A} and outer cover 12_{B} have a smaller diameter and/or periphery than otherwise would have been possible if these external engine components had been mounted directly to their respective engines. This smaller diameter and/or periphery leads to a reduced cross-sectional area in the direction perpendicular to an oncoming freestream of air. This reduction in cross-sectional area is best illustrated by phantom lines 56 and 58. Phantom lines 56 and 58 represent portions of outer covers 12_{A} and 12_{B} if outer covers 12_{A} and 12_{B} were required to accommodate external components 50_{A}, 52_{A}, and 54_{A} and 50_{B}, 52_{B}, and 54_{B}, respectively. As illustrated, relocating the external engine components to remote locations has permitted a significant reduction in the diameter of outer covers 12_{A} and 12_{B} leading to a significant reduction in drag imparted by propulsion systems 30a and 30_{B}.

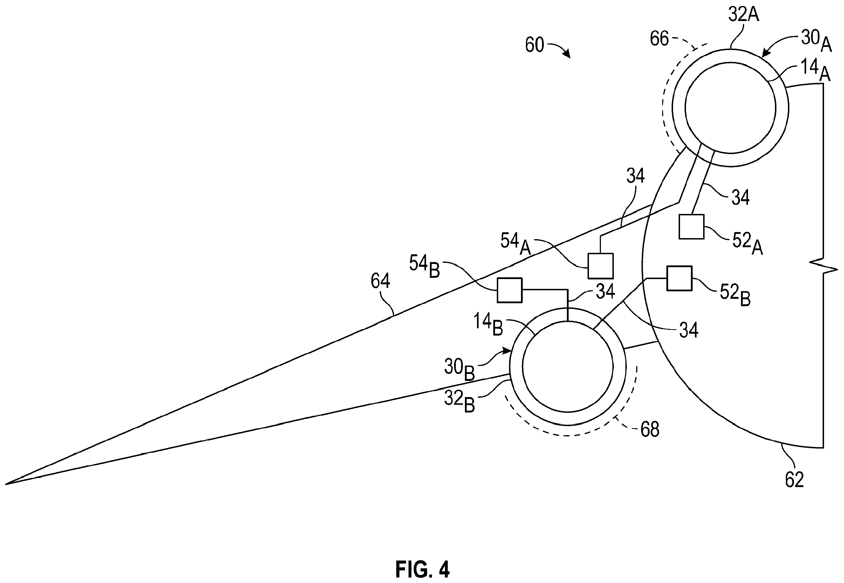

With continuing reference to FIGS. 1-3, FIG. 4 is a fragmentary, schematic view of an alternate non-limiting embodiment of an aircraft 60 configured with multiple propulsion systems 30 (propulsion system 30_{A} and propulsion system 30_{B}). Aircraft 60 is substantially identical to aircraft 40 with the single exception being that the propulsion systems 30A and 30B of aircraft 60 are mounted in an embedded configuration whereas the propulsion systems 30A and 30B of aircraft 40 were mounted in a podded configuration. In the embodiment illustrated in FIG. 4, propulsion system 30A is embedded into fuselage 62 and propulsion system 30B is embedded into wing 64. In other embodiments, propulsion systems may be embedded exclusively into the aircrafts' fuselage or exclusively into the aircraft's wing without departing from the teachings of the present disclosure. In still other embodiments, a single aircraft may have one or more propulsion systems mounted in a podded arrangement and one or more propulsion systems mounted in an embedded arrangement without departing from the teachings of the present disclosure.

Similar to the arrangement shown in FIG. 3, in FIG. 4, external engine components 52a and 54_{A} are mounted to fuselage 62 and wing 64, respectively, and are coupled with engine 14_{A} via couplers 34. Furthermore, external engine components 52_{B} and 54_{B} are mounted to fuselage 62 and wing 64, respectively, and are coupled with engine 14_{B} via couplers 34. As discussed above, this remote positioning of the external components permits for a reduction in the diameter/periphery of outer covers 32_{A} and 32_{B}, as indicated by phantom lines 66 and 68, respectively. This, in turn, leads to a significant reduction in drag imparted by propulsion systems 30_{A} and 30_{B}.

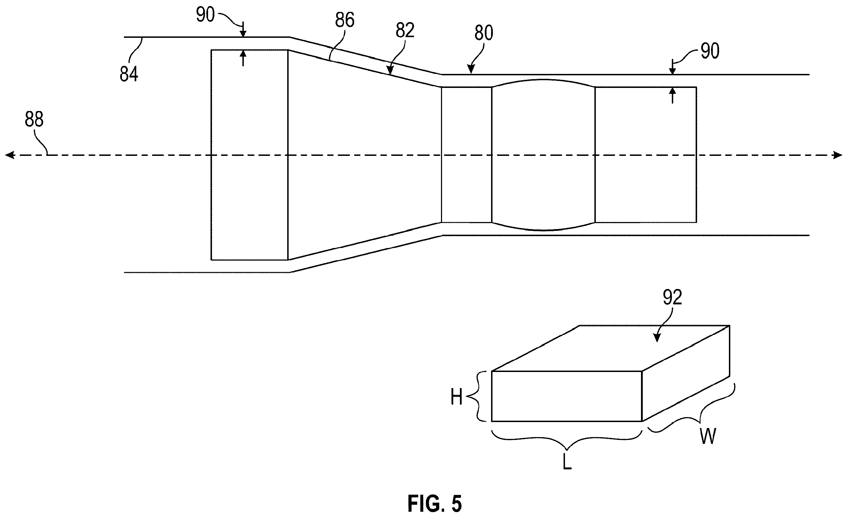

With continuing reference to FIGS. 1-4, FIG. 5 is a schematic view of various elements of a non-limiting embodiment of a propulsion system as taught and described herein. Specifically, FIG. 5 illustrates, in a schematic cross-sectional representation, an outer cover 80 disposed around an engine 82. In the illustrated embodiment, outer cover 80 comprises a nacelle and engine 82 comprises a gas turbine engine. A gap 90 is formed between an inner wall 84 of outer cover 80 and an exterior wall 86 of engine 82. Gap 90 has a depth G which, in some embodiments, may vary slightly in the longitudinal direction (which is indicated by longitudinal axis 88) and which may have a consistent magnitude in other embodiments.

Fig. 5 further illustrates, in a schematic orthogonal view, an exterior engine component 92. Exterior engine component has a height (or thickness) H, a length L, and a width W. As illustrated, the magnitude of height H is greater than the magnitude of depth G. Additionally, the magnitude of length L is greater than the magnitude of depth G. Further, the magnitude of width W is greater than the magnitude of depth G. Accordingly, regardless of angle or orientation, exterior engine component 92 cannot fit within gap 90 and therefore cannot be mounted to the external surface of engine 82. The magnitude of gap 90 would need to be increased until it was at least slightly larger than the smallest dimension of exterior engine component 92 in order to permit the mounting of exterior engine component 92 directly to the exterior surface 86. Relatedly, it was the removal of exterior engine component 92 from outer wall 86 and the repositioning of exterior engine component 92 to a remote location that has made it possible for gap 90 to have the small dimension illustrated. In other words, the mounting of external engine component 92 in a spaced-apart relationship with engine 82 has allowed outer cover 80 to be "shrink wrapped" around engine 82. This, in turn, allows outer cover 80 present as small a cross-sectional profile as possible to the approaching freestream of air. In this manner, this arrangement contributes to a reduction in overall drag, an increase in specific fuel consumption, and an increase in the range of any aircraft to which the illustrated propulsion system is attached.

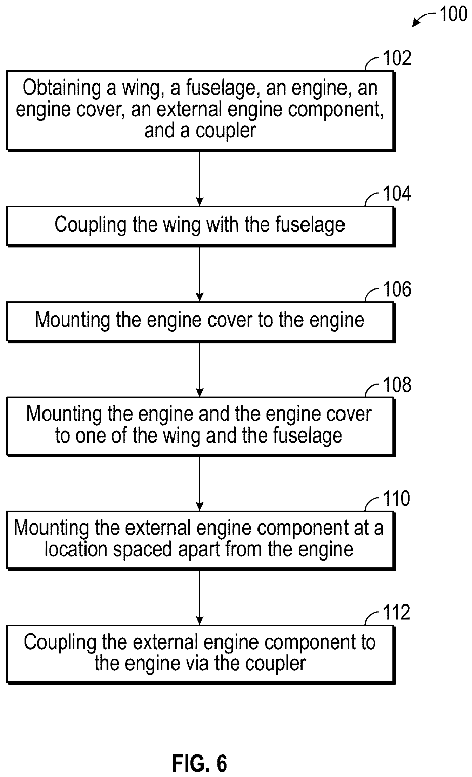

With continuing reference to FIGS. 1-5, FIG. 6 is a block diagram illustrating a method 100 for manufacturing an aircraft. It should be understood that the number of method steps illustrated is not limiting and that methods with greater numbers of steps may also be employed without departing from the teachings of the present disclosure. Furthermore, the sequence in which the method steps are depicted is not intended to be limiting and the method steps may actually be practiced/performed in one or more different sequences without departing from the teachings of the present disclosure.

At step 102, a wing, a fuselage, an engine, an engine cover, an external engine component, and a coupler are obtained. These components may comprises the components as discussed above with respect to FIGS. 1-5 and their corresponding discussion, or alternate embodiments and/or variations thereof may be obtained without departing from the teachings of the present disclosure.

At step 104, the wing and the fuselage are coupled together. This is well known in the relevant art and any suitable method for joining these two components may be employed without departing from the teachings of the present disclosure.

At step 106, the engine cover is mounted to the engine. This is well known in the relevant art and any suitable method for joining these two components may be employed without departing from the teachings of the present disclosure.

At step 108, the engine cover and the engine are mounted to either the wing or the fuselage. If multiple engine covers and engines are being mounted, then one or more may be mounted to the wing and one or more may be mounted to the fuselage.

At step 110, the external engine component is mounted at a location that is spaced apart from the engine. In some embodiments, the external engine component may be mounted to a pylon that is used when a propulsion system is mounted to the aircraft in a podded configuration. In other embodiments, the external engine component may be mounted to the fuselage of the aircraft. This arrangement could be employed regardless of whether the propulsion system is mounted to the aircraft in a podded arrangement or whether the propulsion system is mounted to the aircraft in an embedded arrangement. In other embodiments, the external engine component may be mounted to the wing of the aircraft. Again, this arrangement could be employed regardless of whether the propulsion system is mounted to the aircraft in a podded arrangement or whether the propulsion system is mounted to the aircraft in an embedded arrangement. In still other embodiments in which multiple external engine component are being remotely mounted, any combination of the foregoing mounting arrangements may be employed without departing from the teachings of the present disclosure.

At step 112, the external engine component is coupled to the engine using the coupler. If multiple engine components are remotely mounted to the aircraft, then a corresponding number of couplers may be employed to couple each external engine component to the engine.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the disclosure as set forth in the appended claims.

The present disclosure may be further described by the following Aspects.
**Aspect 1.** A propulsion system for an aircraft, the propulsion system comprising:
   an engine;
   an outer cover associated with the engine, the engine and the outer cover configured for coupling to the aircraft;
   an external engine component; and
   a coupler operatively coupling the external engine component to the engine,
   wherein the external engine component is configured to be coupled to the aircraft at a location spaced apart from the engine.
**Aspect 2.** The propulsion system of Aspect 1, wherein the outer cover comprises a nacelle.
**Aspect 3.** The propulsion system of Aspects 1 or 2, wherein the engine is free of external engine components.
**Aspect 4.** The propulsion system of any one of Aspects 1-3, wherein the outer cover is free of peripheral protuberances along a longitudinal portion of the outer cover that corresponds with an entire longitudinal length of the engine.
**Aspect 5.** The propulsion system of any one of Aspects 1-4, wherein a gap is defined between an internal surface of the outer cover and an entire outer surface of the engine, and wherein a maximum magnitude of the gap is smaller than a minimum external dimension of the external engine component.
**Aspect 6.** An aircraft comprising:
   a fuselage;
   a wing;
   a propulsion system coupled with at least one of the fuselage and the wing, wherein the propulsion system comprises:
      an engine,
      an outer cover associated with the engine,
      an external engine component, and
      a coupler operatively coupling the external engine component to the engine,
      wherein the external engine component is coupled to the aircraft at a location spaced apart from the engine.
**Aspect 7.** The aircraft of Aspect 6, wherein the outer cover comprises a nacelle.
**Aspect 8.** The aircraft of Aspect 6, wherein the engine and the outer cover are coupled to one of the fuselage and the wing via a pylon.
**Aspect 9.** The aircraft of Aspect 8, wherein the external engine component is mounted within the pylon.
**Aspect 10.** The aircraft of Aspect 8, wherein the external engine component is mounted within the wing.
**Aspect 11.** The aircraft of Aspect 8, wherein the external engine component is mounted within the fuselage.
**Aspect 12.** The aircraft of Aspect 6, wherein the engine and the outer cover are embedded within a portion of the aircraft.
**Aspect 13.** The aircraft of Aspect 12, wherein the external engine component is mounted within the wing.
**Aspect 14.** The aircraft of Aspect 12, wherein the external engine component is mounted within the fuselage.
**Aspect 15.** The aircraft of any one of Aspects 6-14, wherein the engine is free of external engine components.
**Aspect 16.** The aircraft of any one of Aspects 6-15, wherein the outer cover is free of peripheral protuberances along a longitudinal portion of the outer cover that corresponds with an entire longitudinal length of the engine.
**Aspect 17.** The aircraft of any one of Aspects 6-16, wherein a gap is defined between an internal surface of the outer cover and an entire outer surface of the engine, and wherein a maximum magnitude of the gap is smaller than a minimum external dimension of the external engine component.
**Aspect 18.** A method of manufacturing an aircraft, the method comprising:
   obtaining a wing, a fuselage, an engine, an engine cover, an external engine component, and a coupler;
   coupling the wing with the fuselage;
   mounting the engine cover to the engine;
   mounting the engine cover and the engine to one of the wing and the fuselage;
   mounting the external engine component at a location spaced apart from the engine; and
   coupling the external engine component to the engine via the coupler.
**Aspect 19.** The method of Aspect 18, wherein mounting the engine and the engine cover to the aircraft comprises attaching the engine and the engine cover to one of the wing and the fuselage with a pylon.
**Aspect 20.** The method of Aspect 18, wherein mounting the engine and the engine cover to the aircraft comprises embedding the engine and the engine cover into one of the wing and the fuselage.

## Claims

1. A propulsion system for an aircraft, the propulsion system comprising:
an engine;
an outer cover associated with the engine, the engine and the outer cover configured for coupling to the aircraft;
an external engine component selected from an accessory gear box, an accessory gear box line replaceable unit, an electronic engine controller, an igniter box, an oil tank, a pressure accumulator, an engine variable geometry flow path actuator, fluid valves, or drain masts; and
a coupler operatively coupling the external engine component to the engine,
wherein the external engine component is configured to be coupled to the aircraft at a location spaced apart from the engine,
**characterized in that** a gap is defined between an internal surface of the outer cover and an entire outer surface of the engine, and wherein a maximum magnitude of the gap is smaller than a minimum external dimension of the external engine component.

2. The propulsion system of claim 1, wherein the outer cover comprises a nacelle.

3. The propulsion system of claims 1 or 2, wherein the outer cover is free of peripheral protuberances along a longitudinal portion of the outer cover that corresponds with an entire longitudinal length of the engine.

4. An aircraft comprising:
a fuselage;
a wing;
a propulsion system according to any one of claims 1-3 coupled with at least one of the fuselage and the wing.

5. The aircraft of claim 4, wherein the engine and the outer cover are coupled to one of the fuselage and the wing via a pylon.

6. The aircraft of claim 5, wherein the external engine component is mounted within the pylon.

7. The aircraft of claim 5, wherein the external engine component is mounted within the wing.

8. The aircraft of claim 5, wherein the external engine component is mounted within the fuselage.

9. The aircraft of claim 4, wherein the engine and the outer cover are embedded within a portion of the aircraft.

10. The aircraft of claim 9, wherein the external engine component is mounted within the wing.

11. The aircraft of claim 9, wherein the external engine component is mounted within the fuselage.

12. A method of manufacturing an aircraft according to any one of claims 4-11, the method comprising:
obtaining a wing, a fuselage, an engine, an engine cover, an external engine component, and a coupler;
coupling the wing with the fuselage;
mounting the engine cover to the engine;
mounting the engine cover and the engine to one of the wing and the fuselage;
mounting the external engine component at a location spaced apart from the engine; and
coupling the external engine component to the engine via the coupler.

13. The method of claim 12, wherein mounting the engine and the engine cover to the aircraft comprises attaching the engine and the engine cover to one of the wing and the fuselage with a pylon, or
wherein mounting the engine and the engine cover to the aircraft comprises embedding the engine and the engine cover into one of the wing and the fuselage.
